(19) Europäisches Patentamt
European Patent Office
Office européen des brevets

(11) Publication number: **0 506 413 B1**

(12) **EUROPEAN PATENT SPECIFICATION**

(45) Date of publication of patent specification: **11.10.95**

(51) Int. Cl.[6]: **C08F 218/00**, G02B 1/04

(21) Application number: **92302651.2**

(22) Date of filing: **26.03.92**

(54) **Organic glass.**

(30) Priority: **28.03.91 IT MI910859**

(43) Date of publication of application:
**30.09.92 Bulletin 92/40**

(45) Publication of the grant of the patent:
**11.10.95 Bulletin 95/41**

(84) Designated Contracting States:
**AT BE CH DE DK ES FR GB GR IT LI LU NL PT SE**

(56) References cited:
**EP-A- 0 201 978**
**EP-A- 0 204 083**
**EP-A- 0 224 123**
**EP-A- 0 227 178**
**EP-A- 0 284 139**
**EP-A- 0 302 537**

(73) Proprietor: **GREAT LAKES CHEMICAL ITALIA S.r.l.**
**Via Medici del Vascello, 40**
**I-20138 Milano (IT)**

(72) Inventor: **Rivetti, Franco**
**28 Via Oglio**
**I-20139 Milan (IT)**
Inventor: **Renzi, Fiorenzo**
**1 Via Dante**
**I-20064 Gorgonzola, Milano (IT)**
Inventor: **Gagliardi, Claudio**
**11/E Via Morandi**
**I-20097 San Donato Milanese, Milan (IT)**

(74) Representative: **Jones, Helen Marjorie Meredith**
**Gill Jennings & Every,**
**Broadgate House,**
**7 Eldon Street**
**London EC2M 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to an organic glass with improved impact strength and with a refractive index equal or similar to that of mineral glass (crown glass).

Organic glass composed of the radicalic polymerization products of poly(allyl carbonates) of polyols and used for optical equipment, is already known in the art and is described, for example, by F. Strain in "Encyclopedia of Chemical Processing and Design", Vol. 1, Interscience Publishers, New York, 1964, pages 799 on.

To enhance one or more of the optical or mechanical characteristics of organic glass, it is common in the art to use polymerizable liquid compositions containing several allyl carbonates and possibly also copolymerizable monomers of different types. In particular, when organic glass having an increased refractive index is required, it is customary to use an allyl carbonate of the aromatic kind, generally combined with an allyl carbonate of the aliphatic kind and with a mixed aliphatic/aromatic allyl carbonate and/or a different monomer for example of the allylic kind, as described in US-A-4.602.075 and EP-A-0,284,139.

At present, there is a demand for an organic glass with a refractive index which is equal or similar to that of mineral glass, and with a good combination of optical and mechanical characteristics, in particular having a high impact strength, and which can be easily obtained and in a practical way .

It has now been found, in accordance with the present invention, that a liquid composition which can be obtained from the transesterification reaction of diallyl carbonate with certain dosages of three different polyols is able to produce, by means of radicalic polymerization, an organic glass with a refractive index which is equal or similar to that of mineral glass, with good optical characteristics and improved impact strength. It is thus possible to satisfy the above demands, avoiding the complications involved in the use of the complex multicomponent polymerizable mixtures of the known art.

In accordance with this, the present invention relates to an organic glass with an improved impact strength and having a refractive index equal or similar to that of mineral glass (crown glass), composed of the radicalic polymerization product of a polymerizable liquid composition, obtained by the transesterification of:

(A) diallyl carbonate:

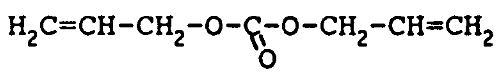

with the mixture of polyols:

(B) bis(2-hydroxyethylether) of bisphenol-A:

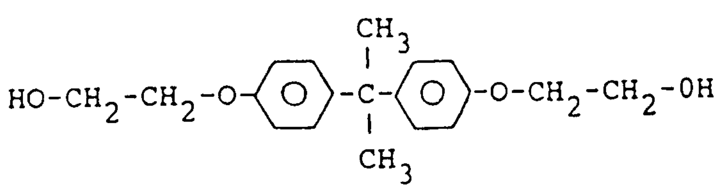

(C) diethylene glycol

$HO-CH_2-CH_2-O-CH_2-CH_2-OH$

(D) tris (hydroxyethyl) isocyanurate:

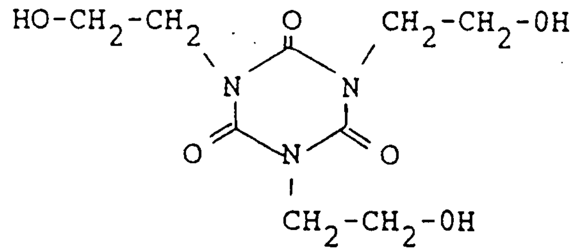

where for every 100 parts by weight of the sum of polyols (B), (C) and (D), polyol (B) is present in a quantity of from 20 to 60% by weight, polyol (C) is present in a quantity of from 20 to 60% by weight and polyol (D) is present in a quantity of from 10 to 40% by weight; and where the molar ratio between the diallyl carbonate and the sum of polyols (A)/[(B) + (C) + (D)] is equal to or higher than 3/1.

In the preferred method, in the transesterification reaction, for every 100 parts by weight of the sum of polyols (B), (C) and (D), polyol (B) is present in a quantity of from 30 to 50% by weight, polyol (C) is present in a quantity of from 30 to 50% by weight and polyol (D) is present in a quantity of from 15 to 30% by weight; and the molar ratio between the diallyl carbonate and the sum of polyols (A)/[(B) + (C) + (D)] is in the range of from 4/1 to 12/1.

In the preparation of the polymerizable liquid composition, the transesterification reaction may be carried out using the procedure generally described in EP-A-0,035,304, by mixing the reagents, in the above-mentioned proportions, and reacting them at a temperature ranging from 80 to 160 °C, and preferably from 90 to 130 °C, in the presence of an alkaline catalyst and continuously eliminating the allylalcohol which is formed as a by-product of the reaction.

The catalysts which are suitable for the purpose are hydroxides, carbonates and alcoholates of alkaline metals, organic bases and ion exchange basic resins. Specific examples of catalysts are sodium hydroxide, sodium carbonate and sodium methylate. The catalyst is best used in quantities of at least 1 ppm (parts per million by weight), with respect to the total weight of polyols and preferably in quantities of 0.01-0.3% by weight with respect to said polyols.

The reaction is most conveniently carried out at a sufficient pressure to maintain the boiling system at the selected operating temperature, to favour the elimination of the allylalcohol from the reaction mixture. For example pressure values of from 20 to 760 torr (2.7 to 101.3 kPa) and preferably from 50 to 400 torr (6.7 to 53.3 kPa) are suitable for the purpose.

Under the above conditions, the reaction times are generally within the range of from 0.5 to 20 hours and usually from 0.5 to 2 hours.

After cooling, the reaction mixture may be washed with water to remove the small quantities of catalyst, and when the aqueous phase has been cleared and separated, the unaltered diallyl carbonate may be eliminated by distillation, by increasing the temperature to 120 °C, under a decreasing pressure with final values of 0.1-20 torr. (13 Pa to to 2.7 kPa) and preferably 1-3 torr. (130 to 400 Pa), the required polymerizable composition being obtained as a residue. If necessary, the composition is filtered, after possible treatment with active carbon.

The polymerizable composition thus obtained is liquid at room temperature, with viscosity values of from 50 to 500 cts and a density of 1.15-1.30 g/ml.

The composition is a complex mixture which contains allyl carbonates of polyols (B), (C), and (D), both in monomeric and oligomeric form, as well as allyl carbonates mixed with said polyols, in a ratio between them mainly depending on the predetermined ratios between the reagents fed into the transesterification reaction.

This composition can be transformed into organic glass using the radicalic polymerization procedure by means of casting. For this purpose, one or more polymerization initiators are added to the composition, which are soluble in the composition and able to generate free radicals at temperatures ranging from 30 to 120 °C. Preferred examples of these initiators are dicyclohexyl peroxy dicarbonate, diisopropyl peroxy dicarbonate, dibenzoyl peroxide, di-sec-butyl peroxy dicarbonate and ter-butyl perbenzoate. The quantity of initiator can generally be in the range of from 1 to 6 parts by weight for every 100 parts of the composition.

The composition containing the initiator, and possibly also one or more additives selected from those mentioned above, is transformed into the relative organic glass operating at temperatures ranging from 30 to 120 °C, with polymerization times varying from 1 to 100 hours.

During the polymerization slight shrinkage takes place and the organic glass thus obtained has higher impact strength values than those of the polymer of bis(allyl carbonate) of diethylene glycol and refractive index values equal or similar to those of mineral glass (crown glass).

The experimental examples which follow provide an illustration of the present invention but do not limit it in any way.

In these examples the polymerizable liquid compositions are prepared by reacting, under transesterification conditions, diallyl carbonate (A) with a mixture of bisphenol-A (B), diethylene glycol (C) and tris(hydroxyethyl) isocyanurate (D) in the above-specified ratios. The polymerization initiator dicyclohexyl peroxy dicarbonate (DCPD) is added to the liquid compositions thus obtained in quantities of 4-5% by weight in the mixture. The compositions containing the catalyst are transformed by polymerization into flat plates having a thickness of 3 mm using the casting technique. With this method the liquid composition, containing the catalyst, is poured into the cavities of a mould composed of two glass elements, with a spacing ring of plasticized polyvinyl chloride or an ethylene-vinyl acetate copolymer (EVA).

The liquid composition is then subjected to polymerization by means of thermal treatment for 20 hours in a forced circulation oven, in accordance with the following temperature profile: 3 hours at 40 °C + 7 hours at 40 to 50 °C + 9 hours at 50 to 80 °C + 1 hour at 80 °C. At the end of this treatment, the moulds are opened and the polymerized products are recovered and kept at 1OO °C for a further hour to decompose any possible initiator residue and ease any possible internal stress.

The following characteristics are determined on the sheets thus obtained:

a) Optical characteristics

- Refractive index [$n_D^{20}$] and Abbe number: measured with an Abbe refractometer (ASTM D-542);
- Haze and visible transmittance (%): measured with a Gardner Hazegard XL-211 (ASTM D-1003);
- Yellow Index (YI) defined as: YI (1OO/Y).(1.277X - 1.06Z), measured with a Gardner XL-805 clorimeter (ASTM D-1925).

b) Physical and mechanical characteristics

- Density (g/ml): determined with hydrostatic scale at a temperature of 25 °C (ASTM D-792);
- Shrinkage (%), calculated with the following formula:

$$\frac{\text{(polymer density - monomer density)}}{\text{(polymer density)}} \times 100$$

- Rockwell Hardness (M), measured with a Rockwell durometer (ASTM D-785);
- Un-notched Izod impact strength (ASTM D-256, modified);
- Dyability, expressed as a luminous transmittance %(ASTM D-1003) of the test material after immersion in a dye bath at 98 °C composed of an aqueous dispersion of BPI GREY of the company BRAIN POWER.

EXAMPLE 1

The following products are loaded into a 3-necked lined flask, equipped with a thermometer and magnetic stirrer and connected to a distillation column with 20 perforated plates, heated by means of diathermic oil circulation:

(A) diallyl carbonate
[1979 g (13.938 moles)];
(B) bisphenol-A ethoxylate [bis(2-hydroxyethylether) of bisphenol-A]; 160 g (0.508 moles)
(C) diethylene glycol
[DEG; 160 g (1.509 moles); and
(D) tris(hydroxyethyl) isocyanurate [THEIC; 80 g (0.306 moles)].

Consequently 40% by weight of component (B), 40% by weight of component (C) and 20% by weight of component (D) are loaded for every 100 parts by weight of the sum of the three components (B), (C) and (D). The molar ratio (A)/[(B) + (C) + (D)] is equal to 6/1.

0.80 ml of a 30% solution by weight of sodium methylate in methanol are also loaded into the flask. The reaction is carried out for 2 hours at a temperature of 95-119 °C and at a pressure of 150 torr. (20 kPa) by distillation of the allyl alcohol as it is formed (total 340 ml; temperature at the column head 59 °C).

At the end of the reaction, the mixture is cooled and washed with three 1,000 ml portions of distilled water. After separating the aqueous layer, the remaining water and excess diallyl carbonate are removed by distillation at 1 torr. (130 Pa) at an increasing temperature up to 120 °C.

691 g of a liquid product are thus obtained, composed of a mixture of allyl carbonate monomers and oligomers of the polyols used, having the following characteristics:

- viscosity (cts, 25 °C): 150,
- refractive index [$n^{20}_D$]: 1.4875,
- density (g/ml; 20 °C): 1.190
- colour (APHA): 5.

## EXAMPLE 2

4% by weight of dicyclohexyl peroxy dicarbonate (Composition I) is added to a sample of the transesterification reaction product of Example 1 and 5% by weight of dicyclohexyl peroxy dicarbonate (Composition II) is added to a second sample. Compositions I and II are polymerized as previously specified and the characteristics shown in Table I (Glass I and II) are determined on the polymer thus obtained.

The characteristics of the polymer (Glass III) obtained by polymerizing a composition (composition III) of bis(allyl carbonate) of diethylene glycol, produced by the transesterification of diallyl carbonateand diethyleneglycol and using 5% by weight of dicyclohexyl peroxy dicarbonate as catalyst, are shown in the same Table as a comparison.

TABLE 1

| Glass No. | I | II | III |
|---|---|---|---|
| Density (23°C) | 1.3005 | 1.2980 | 1.3110 |
| Shrinkage (%) | 8.5 | 8.3 | 12.1 |
| [$n^{20}_D$] | 1.5232 | 1.5232 | 1.5000 |
| Abbe Numbe | 46.5 | 46.5 | 58 |
| YI | 1.80 | 1.60 | 0.90 |
| Haze, % | 0.20 | 0.18 | 0.10 |
| Vis.transmittance (%) | 92.8 | 92.9 | 93.2 |
| Rockwell Hardness (M) | 100 | 97 | 99 |
| Izod (KJ/$m^2$) | 20.5 | 20 | 14 |
| Dyability | 14.8 | 12.6 | 2 |

## EXAMPLE 3

Operating under the same conditions as Example 1, the transesterification products are prepared from components (A), (B), (C) and (D) in the proportions indicated in Table 2, samples IV, V and VI. Table 2 also shows the characteristics of these transesterification products.

TABLE 2

| Sample No. | IV | V | VI |
|---|---|---|---|
| (B) % weight | 35 | 30 | 37 |
| (C) % weight | 40 | 45 | 43 |
| (D) % weight | 25 | 25 | 20 |
| (A)/[(B)+(C)+(D)] | 6/1 | 6/1 | 6/1 |
| [$n^{20}_D$] | 1.4865 | 1.4827 | 1.4850 |
| Visc.,cts, 25°C | 165 | 122 | 127 |
| Density, 20°C | 1.1980 | 1.1963 | 1.1901 |
| APHA colour | 10 | 10 | 5 |

5% by weight of dicyclohexyl peroxy dicarbonate is added to these transesterification products to obtain the polymerizable compositions (compositions IV and VI) which are polymerized as previously specified, and the characteristics are determined on the polymer obtained and are shown in Table 3 (Glass IV, V and VI).

TABLE 3

| Glass No. | IV | V | VI |
|---|---|---|---|
| Density (23°C) | 1.3092 | 1.3124 | 1.3025 |
| Shrinkage (%) | 8.5 | 8.9 | 8.6 |
| [$n^{20}_D$] | 1.5217 | 1.5188 | 1.5216 |
| Abbe Number | 46.5 | 47.5 | 46.6 |
| YI | 1.90 | 2.0 | 1.85 |
| Haze, % | 0.38 | 0.35 | 0.22 |
| Vis.transmittance (%) | 92.2 | 92.3 | 92.5 |
| Rockwell Hardness (M) | 104 | 104 | 101 |
| Izod ($KJ/m^2$) | 15.2 | 17 | 19 |

## Claims

**1.** Organic glass composed of the product of the radicalic polymerization of a polymerizable liquid composition, obtained by the transesterification of:

(A) diallyl carbonate:

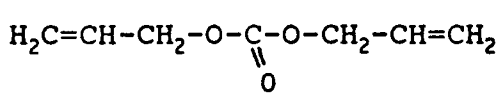

with the mixture of polyols:
(B) bis(2-hydroxyethylether) of bisphenol-A:

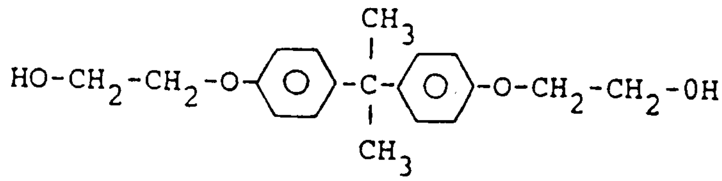

(C) diethylene glycol

$HO-CH_2-CH_2-O-CH_2-CH_2-OH$

(D) tris(hydroxyethyl) isocyanurate:

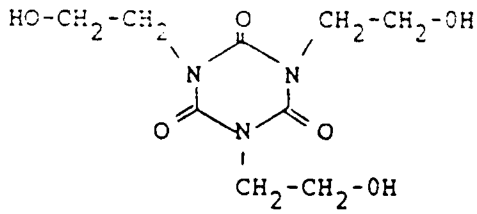

where for every 100 parts by weight of the sum of polyols (B), (C) and (D), polyol (B) is present in a quantity of from 20 to 60% by weight, polyol (C) is present in a quantity of from 20 to 60% by weight and polyol (D) is present in a quantity of from 10 to 40% by weight; and where the molar ratio between the diallyl carbonate and the sum of polyols (A)/[(B) + (C) + (D)] is equal to or higher than 3/1.

**2.** Organic glass in accordance with Claim 1, wherein in the transesterification for every 100 parts by weight of the sum of polyols (B), (C) and (D), polyol (B) is present in a quantity of from 30 to 50% by weight, polyol (C) is present in a quantity of from 30 to 50% by weight and polyol (D) is present in a quantity of from 15 to 30% by weight; and the molar ratio between the diallyl carbonate and the sum of polyols (A)/[(B) + (C) + (D)] is in the range from 4/1 to 12/1.

**3.** Organic glass in accordance with claim 1 or claim 2, wherein the transesterification is carried out at a temperature ranging from 80 to 160 °C, and preferably from 90 to 130 °C, in the presence of a catalyst selected from hydroxides, carbonates and alcoholates of alkaline metals, organic bases and basic ion exchange resins, in quantities of at least 1 ppm (parts per million by weight), with respect to the total weight of the polyols and preferably in quantities of 0.01-0.3% by weight with respect to said polyols, and continuously eliminating the allylalcohol formed as a reaction subproduct.

**4.** Organic glass in accordance with any preceding claim, wherein the transesterification product is polymerized by casting in the presence of one or more polymerization initiators, soluble in the composition and capable of generating free radicals at temperatures ranging from 30 to 120 °C, selected from dicyclohexyl peroxy dicarbonate, diisopropyl peroxy dicarbonate, dibenzoyl peroxide, di-secbutyl peroxy dicarbonate and ter-butyl perbenzoate, in quantities of from 1 to 6 parts by weight for very 100 parts of the composition.

**5.** A liquid composition comprising the transesterification reaction product of
(A) diallyl carbonate:

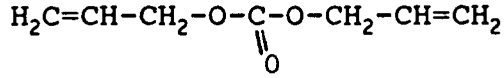

with the mixture of polyols:
(B) bis(2-hydroxyethylether) of bisphenol-A:

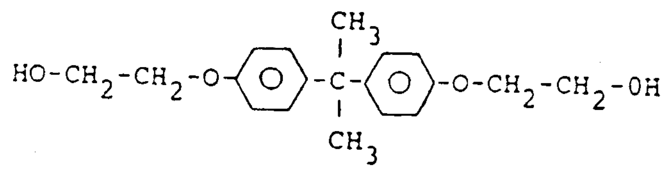

(C) diethylene glycol

$HO-CH_2-CH_2-0-CH_2-CH_2-OH$

(D) tris(hydroxyethyl) isocyanurate:

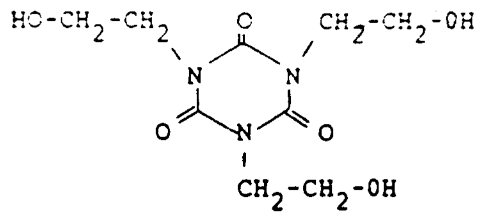

where for every 100 parts by weight of the sum of polyols (B), (C) and (D), polyol (B) is present in a quantity of from 20 to 60% by weight, polyol (C) is present in a quantity of from 20 to 60% by weight and polyol (D) is present in a quantity of from 10 to 40% by weight; and where the molar ratio between the diallyl carbonate and the sum of polyols (A)/[(B) + (C) + (D)] is equal to or higher than 3/1.

**6.** A composition according to claim 5 in which for every 100 parts by weight of the sum of polyols (B), (C) and (D), polyol (B) is present in a quantity of from 30 to 50% by weight, polyol (C) is present in a quantity of from 30 to 50% by weight and polyol (D) is present in a quantity of from 15 to 30% by weight; and the molar ratio between the diallyl carbonate and the sum of polyols (A)/[(B) + (C) + (D)] is in the range from 4/1 to 12/1.

**7.** A process in which
(A) diallyl carbonate

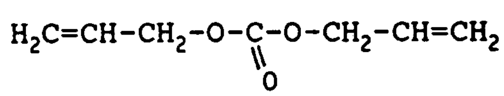

is reacted in a transesterification reaction with the mixture of polyols:
(B) bis(2-hydroxyethylether) of bisphenol-A:

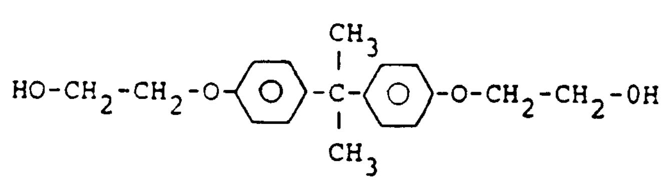

(C) diethylene glycol

$HO-CH_2-CH_2-0-CH_2-CH_2-OH$

(D) tris(hydroxyethyl) isocyanurate:

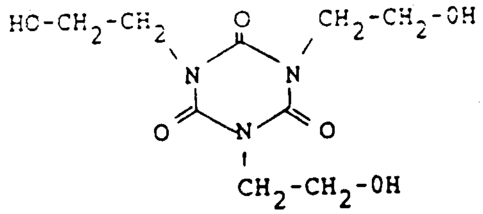

where for every 100 parts by weight of the sum of polyols (B), (C) and (D), polyol (B) is present in a quantity of from 20 to 60% by weight, polyol (C) is present in a quantity of from 20 to 60% by weight and polyol (D) is present in a quantity of from 10 to 40% by weight; and where the molar ratio between the diallyl carbonate and the sum of polyols (A)/[(B) + (C) + (D)] is equal to or higher than 3/1.

**8.** A process according to claim 7 which is carried out at a temperature ranging from 80 to 160 ° C, and preferably from 90 to 130 ° C, in the presence of a catalyst selected from hydroxides, carbonates and alcoholates of alkaline metals, organic bases and basic ion exchange resins, in quantities of at least 1 ppm (parts per million by weight), with respect to the total weight of the polyols and preferably in quantities of 0.01-0.3% by weight with respect to said polyols, and continuously eliminating the allylalcohol formed as a reaction subproduct.

**9.** A process in which a composition according to claim 5 or 6 or the product composition of a process according to claim 7 or claim 8 is polymerised in the presence of a dissolved free radical initiator to form an organic glass.

**10.** A process according to claim 9 in which the polymerisation reaction is conducted at a temperature in the range 30 to 120 ° C.

**11.** A process according to claim 9 or 10 in which the polymerisation initiator is selected from dicyclohexyl peroxy dicarbonate, diisopropyl peroxy dicarbonate, dibenzoyl peroxide, disec-butyl peroxy dicarbonate and ter-butyl perbenzoate, in quantities of from 1 to 6 parts by weight for every 100 parts of the composition.

## Patentansprüche

**1.** Organisches Glas, zusammengesetzt aus dem Produkt der Radikalpolymerisation einer polymerisierbaren flüssigen Zusammensetzung, erhalten durch Umesterung von:
(A) Diallylcarbonat

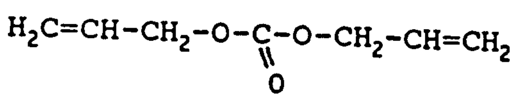

mit der Mischung der Polyole:
(B) Bis(2-hydroxyethylether) von Bisphenol-A:

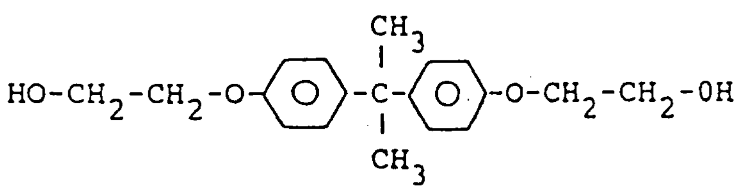

(C) Diethylenglykol

$HO\text{-}CH_2\text{-}CH_2\text{-}0\text{-}CH_2\text{-}CH_2\text{-}OH$

(D) Tris(hydroxyethyl)isocyanurat

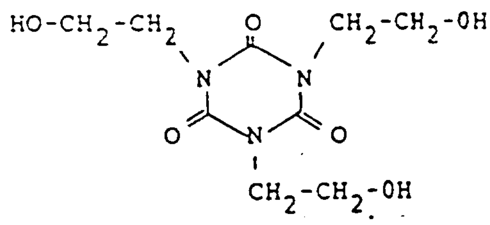

wobei für jede 100 Gew.-Teile der Summe der Polyole (B), (C) und (D) das Polyol (B) in einer Menge von 20 bis 60 Gew.-%, Polyol (C) in einer Menge von 20 bis 60 Gew.-% und Polyol (D) in einer Menge von 10 bis 40 Gew.-% anwesend ist; und wobei das Molverhältnis zwischen Diallylcarbonat und der Summe der Polyole (A)/[(B) + (C) + (D)] gleich oder großer als 3/1 ist.

2. Organisches Glas nach Anspruch 1, wobei bei der Umesterung für jede 100 Gew.-Teile der Summe der Polyole (B), (C) und (D) das Polyol (B) in einer Menge von 30 bis 50 Gew.-%, Polyol (C) in einer Menge von 30 bis 50 Gew.-% und Polyol (D) in einer Menge von 15 bis 30 Gew.-% anwesend ist; und wobei das Molverhältnis zwischen Diallylcarbonat und der Summe der Polyole (A)/[(B) + (C) + (D)] im Bereich von 4/1 bis 12/1 liegt.

3. Organisches Glas nach Anspruch 1 oder 2, wobei die Umesterung bei einer Temperatur von 80 bis 160° C, vorzugsweise von 90 bis 130° C, in Anwesenheit eines Katalysators durchgeführt wird, der ausgewählt ist aus Hydroxiden, Carbonaten und Alkoholaten von Alkalimetallen, organischen Basen und basischen Ionenaustausch-Harzen, und zwar in Mengen von wenigstens 1 TpM (Gew.-TpM) bezogen auf das Gesamtgewicht der Polyole, und vorzugsweise in Mengen von 0,01 - 0,3 Gew.-%, bezogen auf die genannten Polyole, und wobei der als ein Reaktionsnebenprodukt gebildete Allylalkohol kontinuierlich entfernt wird.

4. Organisches Glas nach einem der vorhergehenden Ansprüche, wobei das Umesterungsprodukt durch Gießen polymerisiert wird, und zwar in Anwesenheit von einem oder mehreren Polymerisations-Initiierungsmitteln, die in der Zusammensetzung löslich sind und freie Radikale bei Temperaturen im Bereich von 30 bis 120° C erzeugen können, ausgewählt aus Dicyclohexylperoxydicarbonat, Diisopropylperoxydicarbonat, Dibenzoylperoxid, Di-sec-butylperoxydicarbonat und ter-Butylperbenzoat, in Mengen von 1 bis 6 Gew.-Teilen für jede 100 Teile der Zusammensetzung.

5. Flüssige Zusammensetzung, die das Umesterungs-Reaktionsprodukt von
(A) Diallylcarbonat:

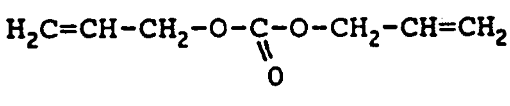

mit der Mischung der Polyole:
(B) Bis(hydroxyethylether) von Bisphenol A:

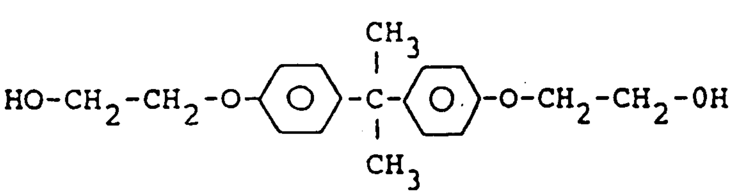

(C) Diethylenglykol

$HO-CH_2-CH_2-0-CH_2-CH_2-OH$

(D) Tris(hydroxyethyl)isocyanurat:

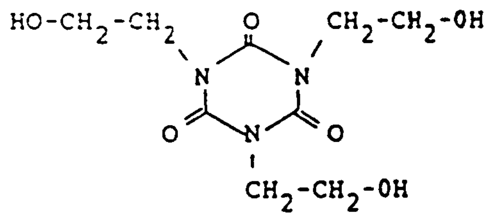

umfaßt,
wobei für jede 100 Gew.-Teile der Summe der Polyole (B), (C) und (D) das Polyol (B) in einer Menge von 20 bis 60 Gew.-%, Polyol (C) in einer Menge von 20 bis 60 Gew.-% und Polyol (D) in einer Menge von 10 bis 40 Gew.-% anwesend ist; und wobei das Molverhältnis zwischen Diallylcarbonat und der Summe der Polyole (A)/[(B) + (C) + (D)] gleich oder größer als 3/1 ist.

**6.** Zusammensetzung nach Anspruch 5, worin für jede 100 Gew.-Teile der Summe der Polyole (B), (C) und (D) das Polyol B in einer Menge von 30 bis 50 Gew.-%, Polyol (C) in einer Menge von 30 bis 50 Gew.-% und Polyol (D) in einer Menge von 15 bis 30 Gew.-% anwesend ist; und das Molverhältnis zwischen dem Diallylcarbonat und der Summe der Polyole (A)/[(B) + (C) + (D)] im Bereich von 4/1 bis 12/1 liegt.

**7.** Verfahren, bei welchem
(A) Diallylcarbonat

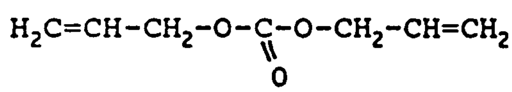

mittels einer Umesterungsreaktion umgesetzt wird mit der Mischung der Polyole:
(B) Bis(2-hydroxyethylether) von Bisphenol-A:

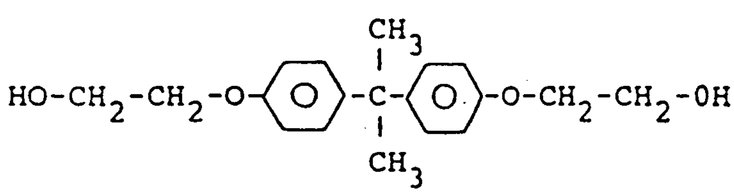

(C) Diethylenglykol

$HO-CH_2-CH_2-0-CH_2-CH_2-OH$

(D) Tris(hydroxyethyl)isocyanurat:

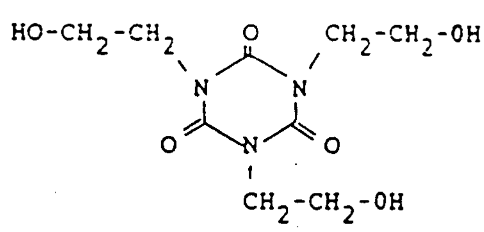

wobei für jede 100 Gew.-Teile der Summe der Polyole (B), (C) und (D) das Polyol (B) in einer Menge von 20 bis 60 Gew.-%, Polyol (C) in einer Menge von 20 bis 60 Gew.-% und Polyol (D) in einer Menge

von 10 bis 40 Gew.-% anwesend ist; und wobei das Molverhältnis zwischen Diallylcarbonat und der Summe der Polyole (A)/[(B) + (C) + (D)] gleich oder größer als 3/1 ist.

**8.** Verfahren nach Anspruch 7, das bei einer Temperatur im Bereich von 80 bis 160° C, vorzugsweise von 90 bis 130° C, in Anwesenheit eines Katalysators durchgeführt wird, der ausgewählt ist aus Hydroxiden, Carbonaten und Alkoholaten von Alkalimetallen, organischen Basen und basischen Ionenaustausch-Harzen, und zwar in Mengen von wenigstens 1 TpM (Gew.-TpM) bezogen auf das Gesamtgewicht der Polyole, und vorzugsweise in Mengen von 0,01 - 0,3 Gew.-%, bezogen auf die genannten Polyole, und wobei der als ein Reaktionsnebenprodukt gebildete Allylalkohol kontinuierlich entfernt wird.

**9.** Verfahren, worin eine Zusammensetzung nach Anspruch 5 oder 6 oder die Produkt-Zusammensetzung nach Anspruch 7 oder 8 in Anwesenheit eines gelösten Initiierungsmittels für freie Radikale polymerisiert wird, um organisches Glas zu bilden.

**10.** Verfahren nach Anspruch 9, wobei die Polymerisationsreaktion bei einer Temperatur im Bereich von 30 bis 120° C durchgeführt wird.

**11.** Verfahren nach Anspruch 9 oder 10, wobei das Polymerisationsinitiierungsmittel ausgewählt ist aus Dicyclohexylperoxydicarbonat, Diisopropylperoxydicarbonat, Dibenzoylperoxid, Di-sec-butylperoxydicarbonat und ter-Butylperbenzoat, in Mengen von 1 bis 6 Gew.-Teilen für jede 100 Teile der Zusammensetzung.

## Revendications

**1.** Verre organique composé du produit de polymérisation radicalaire d'une composition liquide polymérisable obtenue par transestérification

(A) du carbonate de diallyle

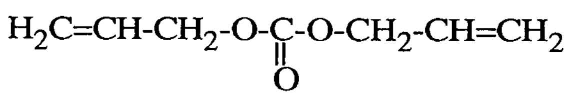

avec un mélange de polyols dont:

(B) le bis (2-hydroxyéthyléther) du bisphénol A :

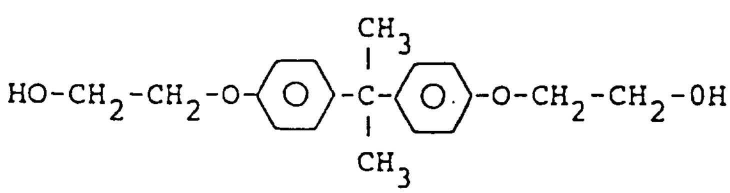

(C) le diéthylèneglycol

$HO-CH_2-CH-O-CH_2-CH_2-OH$

(D) l'isocyanurate de tri(hydroxyéthyle):

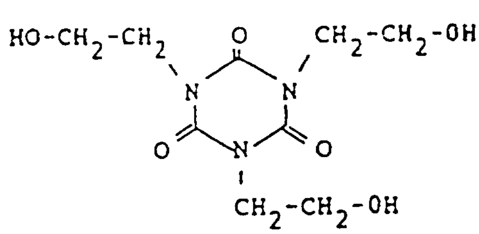

où pour cent parties en poids de la somme des polyols (B), (C) et (D), le polyol (B) est présent en quantités comprises entre 20 et 60% en poids, le polyol (C) est présent en quantités comprises entre 20 et 60% en poids, le polyol (D) est présent en quantités comprises entre 10 et 40% en poids; et où le rapport molaire entre le carbonate de diallyle et la somme des polyols (A)/[(B) + (C) + (D)] est supérieure ou égale à 3/1.

**2.** Verte organique conforme à la revendication 1 pour lequel, dans la transestérification, pour 100 parties en poids de la somme des polyols (B), (C) et (D), le polyol (B) est présent en quantités comprises entre 30 et 50% en poids, le polyol (C) est présent en quantités comprises entre 30 et 50% en poids et le polyol (D) est présent en des quantités comprises entre 15 et 30% en poids; et le rapport molaire entre le carbonate de diallyle et la somme des polyols (A)/[(B) + (C) + (D)] est compris entre 4/1 et 12/1.

**3.** Verte organique conforme aux revendications 1 ou 2, dans lequel la transestérification est effectuée à une température comprise entre 80 et 160 ° C, et de préférence entre 90 et 130 ° C, en présence d'un catalyseur choisi dans l'ensemble formé par des hydroxydes, des carbonates et des alcoolates de métaux alcalins, des bases organiques et des résines basiques échangeuses d'ions, en des quantités d'au moins 1 ppm (parties par million en poids) par rapport au poids total de polyols et de préférence en quantités comprises entre 0,01 et 0,3% en poids par rapport auxdits polyols, en éliminant de façon continue l'alcool allylique, produit secondaire formé au cours de la réaction.

**4.** Verte organique conforme à une quelconque des revendications précédentes, dans lequel le produit de transestérification est polymérisé dans le moule en présence d'un ou de plusieurs amorceurs de la polymérisation, solubles dans la composition et capables d'engendrer des radicaux libres à une température comprise entre 30 ° et 120 ° C, choisi dans l'ensemble formé par le peroxydicarbonate de dicyclohexyle, le peroxydicarbonate de diisopropyle, le peroxyde de dibenzoyle, le peroxydicarbonate de di-sec-butyle et le perbenzoate de ter-butyle, en quantités allant de 1 à 6 parties en poids pour 100 parties de la composition.

**5.** Composition liquide comprenant les produits de transestérification suivants :

(A) du carbonate de diallyle

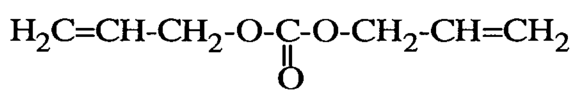

avec un mélange de polyols dont:

(B) le bis (2-hydroxyéthyléther) du bisphénol A :

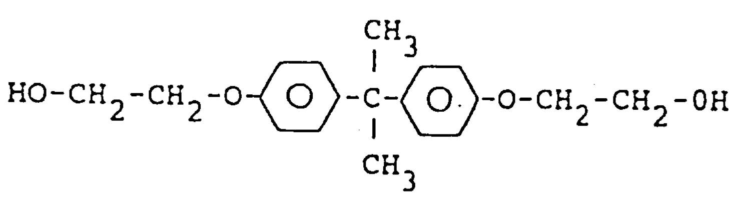

(C) le diéthylèneglycol

$HO-CH_2-CH-O-CH_2-CH_2-OH$

(D) l'isocyanurate de tri(hydroxyéthyle) :

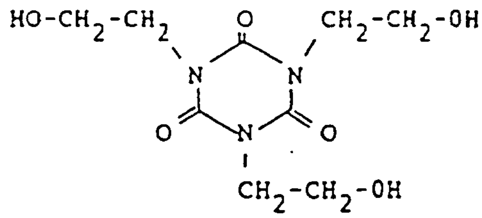

où pour cent parties en poids de la somme des polyols (B), (C) et (D), le polyol (B) est présent en quantités comprises entre 20 et 60% en poids, le polyol (C) est présent en quantités comprises entre 20 et 60% en poids, le polyol (D) est présent en quantités comprises entre 10 et 40% en poids; et où le rapport molaire entre le carbonate de diallyle et la somme des polyols (A)/[(B) + (C) + (D)] est supérieure ou égale à 3/1.

6. Composition conforme à la revendication 5, dans lequel pour 100 parties en poids de la somme des polyols (B), (C) et (D), le polyol (B) est présent en quantités comprises entre 30 et 50% en poids, le polyol (C) est présent en quantités comprises entre 30 et 50% en poids et le polyol (D) est présent en des quantités comprises entre 15 et 30% en poids; et le rapport molaire entre le carbonate de diallyle et la somme des polyols (A)/[(B) + (C) + (D)] est compris entre 4/1 et 12/1.

7. Procédé dans lequel, on soumet

(A) le carbonate de diallyle

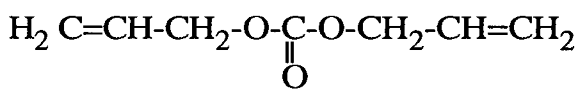

à une réaction de transestérification avec un mélange de polyols dont:

(B) le bis (2-hydroxyéthyléther) du bisphénol A :

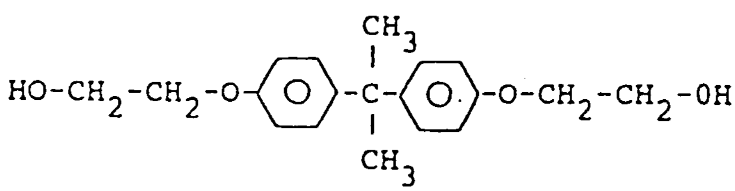

(C) le diéthylèneglycol

$HO-CH_2-CH_2-O-CH_2-CH_2-OH$

(D) l'isocyanurate de tri(hydroxyéthyle) :

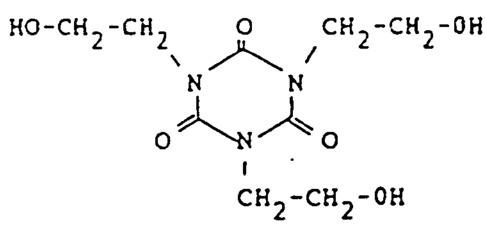

où pour cent parties en poids de la somme des polyols (B), (C) et (D), le polyol (B) est présent en quantités comprises entre 20 et 60% en poids, le polyol (C) est présent en quantités comprises entre

20 et 60% en poids, le polyol (D) est présent en quantités comprises entre 10 et 40% en poids; et où le rapport molaire entre le carbonate de diallyle et la somme des polyols (A)/[(B) + (C) + (D)] est supérieure ou égale à 3/1.

**8.** Procédé conforme à la revendication 7, qui est effectué à une température comprise entre 80° et 160°C, et de préférence entre 90° et 130°C, en présence d'un catalyseur choisi dans l'ensemble formé par des hydroxydes, des carbonates et des alcoolates de métaux alcalins, des bases organiques et des résines basiques échangeuses d'ions, en des quantités d'au moins 1 ppm (parties par million en poids) par rapport au poids total de polyols et de préférence en quantités comprises entre 0,01 et 0,3% en poids par rapport auxdits polyols, en éliminant de façon continue l'alcool allylique, produit secondaire formé au cours de la réaction.

**9.** Procédé lors duquel une composition conforme aux revendications 5 ou 6 ou une composition obtenue par un procédé conforme aux revendications 7 ou 8 est polymérisée en présence d'un amorceur radicalaire dissous pour former un verte organique.

**10.** Procédé conforme à la revendication 9, dans lequel la réaction de polymérisation est effectuée à une température comprise entre 30° et 120°C.

**11.** Procédé conforme à la revendication 9 ou 10, dans lequel l'amorceur de polymérisation est choisi dans le groupe formé par le peroxydicarbonate de dicyclohexyle, le peroxydicarbonate de diisopropyle, le peroxyde de dibenzoyle, le peroxydicarbonate de di-sec-butyle et le perbenzoate de ter-butyle, en quantités allant de 1 à 6 parties en poids pour 100 parties de la composition.